**Europäisches Patentamt**

**European Patent Office**

**Office européen des brevets**

(11) Numéro de publication : **0 470 876 B1**

# (12) FASCICULE DE BREVET EUROPEEN

(45) Date de publication du fascicule du brevet :
**01.03.95 Bulletin 95/09**

(51) Int. Cl.$^6$ : **H04L 12/46**

(21) Numéro de dépôt : **91401981.5**

(22) Date de dépôt : **16.07.91**

(54) **Procédé et dispositif de pontage entre réseaux locaux.**

(30) Priorité : **20.07.90 FR 9009300**

(43) Date de publication de la demande :
**12.02.92 Bulletin 92/07**

(45) Mention de la délivrance du brevet :
**01.03.95 Bulletin 95/09**

(84) Etats contractants désignés :
**DE ES GB IT**

(56) Documents cités :
**EP-A- 0 156 542**
**IEEE NETWORK vol. 2, no. 1, Janvier**
**1988,NEW YORK, US pages 72 - 76; M. GERLA**
**ET AL: 'CONGESTION CONTROL ININTER-**
**CONNECTED LANS'**
**DATA COMMUNICATIONS, vol. 14, no. 7, Juin**
**1985, NEWYORK US pages 177 - 189; C. SOLO-**
**MON: 'EXPLORING THE PROBLEMS OF**
**INTERNETWORKING'**
**COMPUTER COMMUNICATION REVIEW, vol.**
**20, no. 1, Janvier 1990,NEW YORK US pages**
**76 - 90; J. ROBINSON ET AL: 'CONGESTION**
**CONTROL IN BBN PACKET-SWITCHED**
**NETWORKS'**

(72) Inventeur : **Thill, Jean-Claude**
**THOMSON-CSF**
**SCPI,**
**Cédex 67**
**F-92045 Paris La Défense (FR)**
Inventeur : **Demotes-Mainard, Bertrand**
**THOMSON-CSF**
**SCPI,**
**Cédex 67**
**F-92045 Paris La Défense (FR)**
Inventeur : **LeLann, Gérard**
**THOMSON-CSF**
**SCPI,**
**Cédex 67**
**F-92045 Paris La Défense (FR)**
Inventeur : **Rolin, Pierre**
**THOMSON-CSF**
**SCPI,**
**Cédex 67**
**F-92045 Paris La Défense (FR)**

(74) Mandataire : **Courtellemont, Alain et al**
**THOMSON-CSF,**
**SCPI,**
**B.P. 329,**
**50, rue Jean-Pierre Timbaud**
**F-92402 Courbevoie Cédex (FR)**

(73) Titulaire : **THOMSON-CSF**
**173, Boulevard Haussmann**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un procédé et un dispositif de pontage entre réseaux locaux mettant en oeuvre une politique de contrôle de flux adapté aux besoins des communications.

Elle s'applique notamment à l'interconnexion de réseaux locaux ETHERNET au travers de réseaux radio VHF.

L'informatique distribuée fait actuellement un large appel aux techniques de transmissions dites "réseaux locaux" qui sont des transmissions multilatérales entre usagers partageant un même support de transmission physique.

Le développement de ces techniques a naturellement fait naître un grand besoin de moyens d'interconnexions entre réseaux locaux et ce suivant différents principes, c'est-à-dire à différentes couches de protocoles. Ainsi la normalisation IEEE 802.X (ISO 8802.X) a rassemblé dans une même famille les réseaux locaux les plus répandus : Ethernet (802.3), Token bus (802.4), Token ring (802.5) et les projets 802.6, 802.9 etc... et défini les services de base qu'offrent de façon standard ces réseaux, ces services étant implantés dans des couches MAC, MAC étant l'abréviation anglaise de "Medium Access Control". Une des techniques d'interconnexion entre réseaux de la famille 802 consiste de par ce qui précède à effectuer l'interconnexion des couches MAC pour réaliser des ponts entre réseaux.

Classiquement un pont est formé par un équipement reliant deux réseaux locaux ou plus, identiques ou non, qui est capable de mémoriser sur chaque accès les trames type MAC valides qu'il reçoit et de les réémettre sur l'autre accès. La principale propriété d'un pont est d'être filtrant, c'est-à-dire qu'il a la possibilité d'interpréter l'adresse du destinataire de chaque trame pour savoir d'après une table qu'il possède s'il y a lieu de traiter ou non la trame considérée. Les travaux en cours pour l'élaboration de la norme IEEE 802.1 donnent au pont une capacité pour élaborer le routage des trames de façon dynamique en dialoguant avec les autres ponts du réseau et en modifiant de lui-même sa table de filtrage. De la sorte, un pont doit pouvoir traiter une trame après l'autre sans les associer en réalisant une transparence par rapport au protocole de niveau supérieur et doit pouvoir prendre ses décisions au coup par coup sans garder un historique de la communication. Naturellement ce dernier point peut être gênant lorsqu'en cours de fonctionnement apparaît une saturation du pont. Malheureusement le phénomène de saturation apparaît d'autant plus souvent que le pont interconnecte des réseaux de capacités très différentes. A titre d'exemple, en considérant un pont recevant des trames de dix communications qui désirent une capacité de 1 chacune et qui ne peuvent fonctionner en dessous de 0,5. Si ce pont ne peut à cet instant offrir qu'une capacité de 2 au total, il n'attribuera qu'une capacité de 0,2 à chaque communication et par conséquence aucune communication ne sera opérante.

Le but de l'invention est de pallier les inconvénients précités.

A cet effet, l'invention a pour objet, un procédé de pontage entre réseaux locaux caractérisé en ce qu'il consiste à associer de façon implicite l'adresse de groupe du champs destinataires d'une trame MAC avec un descripteur d'associations contenu dans le pont, à effectuer dans le pont un contrôle de flux en discriminant le flux association par association en utilisant les informations du descripteur d'associations et à réémettre la trame sur le réseau suivant avec comme adresse destinataire soit l'adresse du ou des destinataires soit l'adresse de groupe de l'association dans le nouveau réseau.

L'invention a également pour objet un dispositif pour la mise en oeuvre du procédé précité.

D'autres caractéristiques et avantages de l'invention apparaîtront ci-après à l'aide de la description qui suit faite en regard des dessins annexés qui représentent :
- La figure 1 un mode de réalisation d'une architecture générale d'interconnexion par ponts entre stations appartenant à deux réseaux.
- Les figures 2A et 2B des exemples de ponts réalisés respectivement sur un réseau radio local et sur un réseau filaire local.
- La figure 3 un mode d'adressage en table.
- Les figures 4A et 4B des contenus de descripteurs d'association.
- La figure 5 un mode de réalisation d'un dispositif selon l'invention pour le pontage entre réseaux locaux.

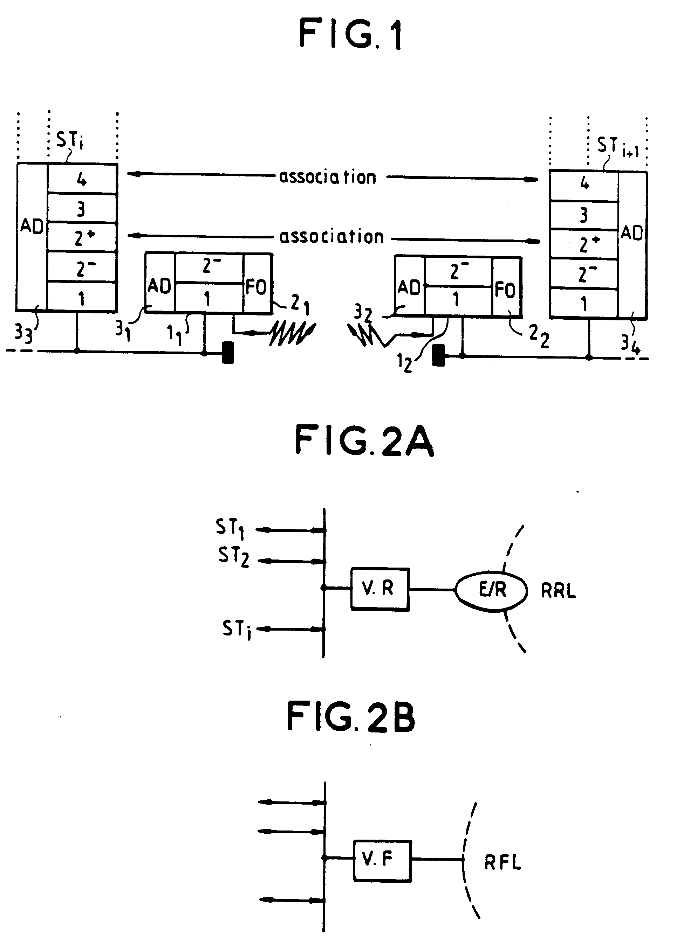

Le procédé et le dispositif de pontage selon l'invention qui sont décrits ci-après, ont pour principale propriété d'être parfaitement invisibles des entités ou stations communicantes, c'est-à-dire d'avoir la propriété de pouvoir commuter des trames de messages ou de données provenant de deux réseaux distincts seulement lorsque cette commutation est nécessaire sans que celle-ci lui soit adressée explicitement par les entités communicantes des réseaux. Ce résultat est obtenu en deux temps. Comme le montre la figure 1 chaque pont $1_i$ entre réseaux de stations $ST_i$ dispose d'un minimum des fonctionnalités de niveaux 1 et $2^-$ définis par la norme ISO/OSI et d'un dispositif de gestion d'adresses $2_i$ pour assurer des contrôles sur les flux de données les traversant. De plus les ponts $1_i$ et stations $ST_i$ sont dotés d'une fonction d'administration. Sur la figure 1 les symboles FO et AD des blocs $2_i$ et $3_i$ désignent respectivement les fonctions opératoires de types traduction d'adresse ou contrôle et les fonctions d'administration de types gestion d'adresses.

Cette architecture permet comme le montre les figures 2A et 2B d'établir des ponts sur des réseaux locaux de stations $ST_i$ très divers tels que réseau de radio local (RRL), réseau de véhicule local (RVL) ou encore réseau filaire local (RFL), VR et VF figurent sur les figures 2A et 2B des ponts entre stations. Tout équipement entrant dans la composition d'un réseau dispose par nature de capacité limitée en mémoire, en vitesse de traitement, en vitesse d'entrée-sortie des données. Le flux de données entrant est évidemment contrôlé par l'émetteur. Le flux total entrant ne doit pas dépasser la capacité du récepteur. Si cela se produit la saturation ainsi produite doit être éliminée pour ne pas conduire à un gaspillage de ressources qui ne ferait pas progresser la transmission. Ainsi assurer la transmission d'une trame au delà d'un certain retard ne sert à rien si des processus de contrôle de niveaux supérieurs sont mis en oeuvre. Ces derniers génèrent une reprise automatique rendant inutile la transmission précédente. En cas de saturation il est donc nécessaire de contrôler la façon précise l'attribution des ressources disponibles en fonction du besoin. Dans ce qui suit, le terme "association" désigne conformément à la terminologie utilisée par la norme ISO/OSI, un couple d'entité (origine, destination) de bout en bout, indépendamment du fait que les interactions sont régies en mode datagramme ou connexion.

Selon l'invention, chaque pont, doit à partir de descriptif d'association indiquant le besoin en ressources prévisibles, la durée de vie tolérée d'une trame dans le pont, le temps de remanence de l'association (temps au bout de laquelle elle peut être considérée comme non active de façon à récupérer les ressources), et à partir de l'adresse MAC considérée comme un identifiant d'association attribuer ses ressources c'est à dire affecter ses mémoires tampons, sa capacité de traitement aux trames des associations qu'il est susceptible de satisfaire et régler les autres. Pour cela, il modélise sa capacité à absorber et commuter des trames par des crédits qui représentent une capacité de stockage déterminée (par exemple, une trame de niveau 2 dans la norme ISO/OSI), une capacité de traitement et une capacité d'entrée-sortie, Si C désigne le nombre total de crédits disponibles dans un pont, C doit vérifier la relation :

$$C = C_c + C_d$$

avec :

$C_c$ = nombre total de crédits offerts aux connexions

$C_d$ = nombre total de crédits offerts aux datagrammes.

Considérons pour fixer les idées le cas de ponts V-R, les flux venant d'un réseau RVL. La lenteur d'un réseau RRL peut provoquer un engorgement des ponts V-R. Il est donc souhaitable, non seulement de n'émettre de trames que sur les chemins utiles (fonction d'un pont filtrant), mais également en cohérence avec les mécanismes de contrôle de flux appliqués par les protocoles de bout en bout, généralement de type allocation de crédit par retour d'acquittement ; il est en particulier dommageable de transmettre trop tard une trame qui a déjà été dupliquée par le protocole de bout en bout de la station émettrice. La solution mise en oeuvre par l'invention n'applique aucune modification des logiciels implantant les protocoles d'associations dans les stations. Elle repose seulement sur la fonction administration du réseau et est basée sur une interprétation permissive des principes de contrôle de flux justifié par une analyse des performances résultantes.

Selon l'invention chaque pont est géré à l'aide d'un certain nombre de variables d'état et de type de contrôle de flux ainsi qu'à l'aide d'un mécanisme de désignation des associations.

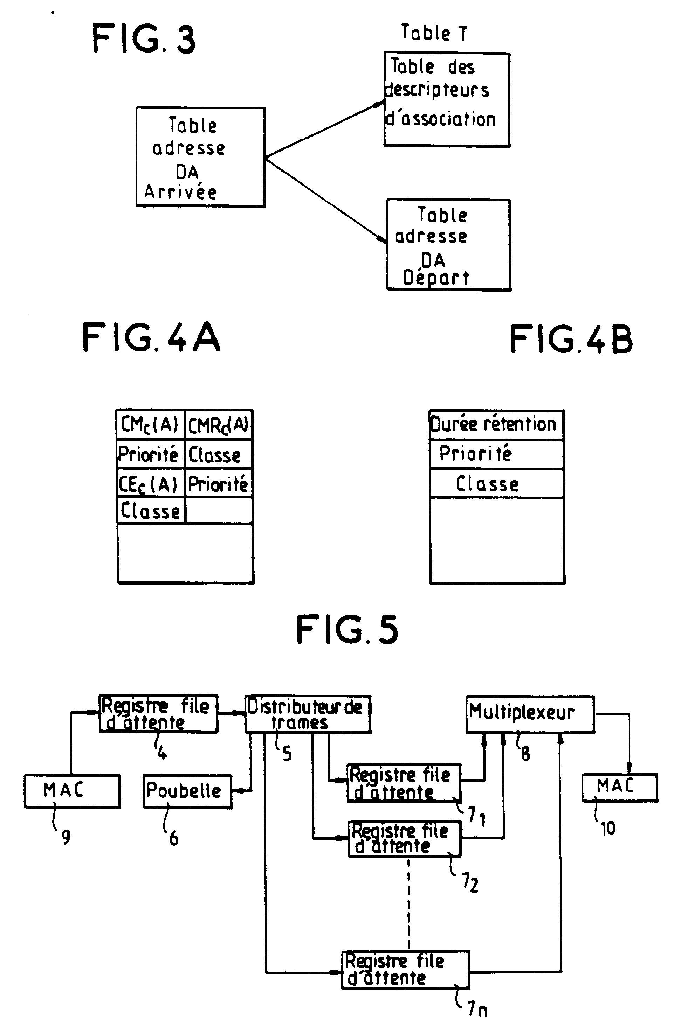

Les variables d'état gérées par un pont sont destinées à lui permettre d'allouer les crédits de façon optimale et donc de fournir un service de commutation optimal aux associations. Comme les associations correspondent à des types de services différents (en termes de débit, délai, urgence, importance, etc... ), il est inévitable d'avoir à les répartir dans différentes classes (de services) ou de leur attribuer des priorités différentes. Mais il est aussi possible d'éviter d'avoir à faire de la réquisition de crédits (en cas de conflit entre associations de priorités différentes) ou bien d'accepter la réquisition de crédits (destruction d'une trame en attente pour acceptation d'une nouvelle trame plus prioritaire). Tout d'abord toute association A doit être connue du pont avec lequel elle coopère. En effet, la fonction administration de chaque pont doit comme le montre la figure 3 initialiser une table T permettant au pont de connaître les associations qu'il a à contrôler. Pour cela un descripteur d'association représenté aux figures 4A et 4B est créé pour chaque association connexion ou datagramme effectivement établie. Chaque descripteur d'association-connexion contient un mot d'option de non réquisition et un mot d'option de réquisition. Une option de non réquisition contient le nombre de crédits alloués $CM_c(A)$, le nombre de crédits disponibles notés $CR_c(A)$, la priorité ou la classe de l'association. L'option réquisition contient le nombre de crédits en cours d'emploi (trames séquencées en attente), notés $CE_c(A)$ et la priorité ou la classe de l'association.

Un descripteur d'association datagramme contient un mot représentant la durée restante de rétention du crédit et la priorité ou la classe de l'association. Pour les datagrammes, bien qu'aucune allocation de crédits ne soit a priori effectuée par avance, il est indispensable de prévoir la possibilité de garantir une certaine qualité de service dépendant de l'importance du flux datagramme considéré. Ceci peut présenter de l'importance pour certaines classes de trafic en situation critique. Pour cela le principe retenu consiste à faire bénéficier toute association datagrammes d'une durée de rétention de crédits (qui peut être nulle) ceci signifie que si à l'arrivée d'un i+1ème datagramme pour une association donnée survient "à temps après le départ du $i^{ème}$ datagramme le crédit existe encore pour ce i+1ème datagramme. Dans ces conditions le contrôle de flux exercé par un pont sur les associations datagrammes revient à effectuer un contrôle de type connu sous la désignation anglaise "Rate Control" aucun autre choix n'étant d'ailleurs possible dans le cas de datagrammes non acquittés. Pour les connexions, le problème est différent car en principe le choix entre différentes politiques de contrôle de flux dans le pont reste possible. Cependant, il faut observer qu'un contrôle de flux par retour d'acquittement n'est possible que si le pont est capable de détecter et interpréter les trames d'acquittement circulant sur les associations connexions. Comme cette interprétation est obligatoirement dépendante des protocoles d'associations utilisés ce type de contrôle paraît contraignant et il est préférable de faire bénéficier toute association-connexion d'un nombre minimum de crédits garantis $CM_c$. De la sorte une émission de trames par un pont qui consommait l'un de ces crédits garantis peut libérer le crédit en question, lequel est conservé pour la connexion concernée. Le contrôle de flux résultant exercé par un pont est lui aussi du type "Rate Control" bien que la fréquence de ré-allocation de crédits soit totalement assujettie à la fréquence d'émission effective des trames.

Un pont est dimensionné pour pouvoir gérer jusqu'à n associations connexions et jusqu'à m associations datagrammes simultanées. Dans le cas d'une option de "non réquisition" un pont dispose de n variables $CM_c(A_i)$, n variables $CR_c(A_i)$, $m_1$ boolens à l'état Vrai pour les associations datagrammes connues du pont ( durée restante de rétention nulle) et $m_2$ boolens ($m = m_1+m_2$) à l'état Faux pour les associations datagrammes inconnues du pont. Le nombre total de crédits Cc offert aux connexions est déterminé par la relation :

$$\sum_{i=1}^{n} CM_c(A_i) \leqslant C_c \text{ avec } m < C_d$$

Une variable globale CD est utilisée pour donner à tout instant h le nombre de crédits sûrement disponibles, cette variable globale $CD_h$ est définie par la relation

$$CD(h) = C - [\sum_{i=1}^{n} CM_c(A_i, h) + m_1(h)]$$

Dans le cas de l'option "réquisition" un pont dispose de n variables $CE_c(1_i)$, $m_1$ boolens à l'état Vrai et $m_2$ boolens à l'état Faux. Dans ce cas le nombre de crédits sûrement disponible $CD_h$ vérifie la relation

$$CD(h) = C - [\sum_{i=1}^{n} CE_c(A_i, h) + m_1(h)]$$

En prévoyant une mémoire tampon toujours libre pour examiner toute trame entrante, il est toujours possible pour chaque pont de déterminer l'association concernée et s'il s'agit d'une nouvelle association, l'examen du nombre de crédits sûrement disponible $CD_h$ permet de décider d'accepter ou non la nouvelle association. Dans le cas d'une connexion, la valeur $CM_c$ est déterminée par la classe/priorité de la connexion.

La désignation des associations est utilisée pour permettre au pont de suivre les ouvertures-fermetures et les utilisations des associations. Pour éviter d'avoir à interpréter des trames d'association et suivre les échanges de toutes les trames qui traversent le pont, le contrôle du flux doit alors être exercé par un processus de traduction d'adresses. On peut utiliser pour cela la faculté offerte par les réseaux locaux ISO 8802 de définir et d'utiliser des adresses de groupes en plus d'adresses physiques au niveau de chaque "médium access control" (MAC), à cette fin, pour tout réseau de départ donné (RVL par exemple) le pont recense la configuration des associations qui seront établies ultérieurement avec des entités distantes. Des associations peuvent également être établies dynamiquement. Via l'administration de réseau tout association se voit ainsi attribuer une adresse de groupe. Ainsi si G désigne l'ensemble des adresses de groupe utilisables dans un réseau (interprétable par un coupleur) cet ensemble est partionné en adresses $G_0$ de groupe réservé pour usage local, en adresses $G_c$ de groupes pour associations connexions, éventuellement décomposées en $G_{c1}, G_{c2} ... G_{cx}$ avec x classes ( service, et priorité ) et des adresses GD de groupes pour associations datagrammes éventuellement décomposées en $G_{d1}, G_{d2}$ etc ... $G_{dy}$ s'il existe y classes (services priorités). Dans ce cas avec les notations n et m précédentes désignant respectivement les associations connexions et les m associations datagrammes simultanées on a la relation

$$\text{MAX}_{[RVL]} \left\{ n + m \right\} < |G_c| + |G_d|$$

Dans ces conditions ce n'est que par la somme des associations ouvertes sur l'ensemble des réseaux interconnectés qu'il est possible de déterminer la faisabilité de cette solution à partir du nombre maximum d'associations ouvertes depuis un seul réseau. Cela permet à un pont d'exercer un contrôle de flux sélectif par examen de l'adresse MAC de destination (DA) de toutes les trames qui le traverse. Comme cette fonction d'examen est de toute façon exigée de la part de tout équipement couplé à un réseau, la solution précédente a l'avantage de rendre le pont indépendant des protocoles d'associations et de n'entraîner aucun surcoût d'exécution.

Le dispositif pour la mise en oeuvre du procédé selon l'invention est représenté à la figure 5, il comporte un registre de files d'attente 4, un distributeur de trames 5, une poubelle 6, un ensemble de registres file d'attente 7 et un multiplexeur 8. Il est connecté à un réseau d'entrée par un circuit MAC 9 et à un réseau de sortie par un circuit MAC 10. Les messages transmis par le circuit MAC 9 sont appliqués au registre de file 4 qui a la structure d'une file d'attente basée sur le principe connu sous l'abréviation FIFO de First-In First-Out. La sortie du registre de file 4 est reliée à l'entrée du distributeur 5 qui trie les trames en fonction du champ destinataire DA, attribue une date d'arrivée et rejette la trame dans la poubelle 6 si l'adresse DA est inconnue. Les files d'attente $7_1$ à $7_n$ de l'ensemble des registres de file 7 sont reliées respectivement à n sorties du distributeur 5 et concernent chacune une seule association. Ces files peuvent être gérées suivant le même principe FIFO que la file d'attente 4. Mais également elles peuvent être gérées en tampons tournants selon le contenu du descripteur d'associations. Le multiplexeur 8 possède n entrées reliées respectivement aux sorties des n files d'attente $7_1$ à $7_n$. Il a pour but d'éliminer des files d'attente $7_1$ à $7_n$ les trames qui ont épuisé leur délai de rétention. Lorsque la couche MAC de sortie est prête à émettre une nouvelle trame, le multiplexeur 5 sélectionne celle-ci parmi les têtes de file $7_1$ à $7_n$ en fonction de la priorité, du degré de satisfaction de service demandé défini par la capacité minimale requise et par le délai de réquisition des ressources. Enfin le multiplexeur 8 convertit l'adresse DA pour le nouveau réseau.

**Revendications**

1.  Procédé de pontage entre réseaux locaux caractérisé en ce qu'il consiste à associer de façon implicite l'adresse de groupe du champ destinataire d'une trame MAC avec un descripteur d'association contenue dans le pont, à effectuer dans le pont un contrôle de flux en discriminant les flux association par association et en utilisant les informations du descripteur d'association et à réémettre la trame sur le réseau suivant avec comme adresse destinataire soit l'adresse du ou des destinataires soit l'adresse de groupe de l'association dans le nouveau réseau.

2.  Procédé selon la revendication 1 caractérisé en ce qu'il consiste à créer pour chaque association un descripteur d'association-connexion et un descripteur d'association-datagramme.

3.  Procédé selon la revendication 2 caractérisé en ce qu'un descripteur d'association connexion comporte un mot d'option de non réquisition indiquant le nombre de crédits alloués $CM_c(A)$, le nombre de crédits disponibles $CR_c(A)$, la priorité et la classe de l'association.

4.  Procédé selon l'une quelconque des revendications 2 et 3 caractérisé en ce qu'un descripteur d'association connexion comporte un mot d'option de réquisition indiquant le nombre de crédits en cours d'emploi $CE_c(A)$, la priorité et la classe de l'association.

5.  Procédé selon l'une quelconque des revendications 1 à 3 caractérisé en ce que le contrôle de flux a lieu en affectant au pont un crédit représentant une capacité de stockage déterminé égale à la somme du nombre $C_c$ total de crédits offerts aux connexions entre réseaux et du nombre $C_d$ de crédits offerts aux datagrammes transmis entre réseaux.

6.  Procédé selon la revendication 5 caractérisé en ce que chaque descripteur d'association datagramme comporte un mot représentant la durée restante de rétention du crédit, la priorité et la classe de l'association.

7.  Dispositif de pontage entre les réseaux locaux pour la mise en oeuvre du procédé selon l'une quelconque des revendications 1 à 6 caractérisé en ce que chaque pont comporte un registre de file d'attente (4) de trames couplé entre un premier réseau et un distributeur de trames (5) et un ensemble de registres file d'attente ($7_1 ... 7_n$) reliés en parallèle entre la sortie du distributeur de trame (5) et un multiplexeur (8) couplé à un deuxième réseau.

8. Dispositif selon la revendication 7 caractérisé en ce que le distributeur de trames (5) trie les trames en fonction de leur champ destinataire, attribue une date d'arrivée et rejette les trames si l'adresse destinataire est inconnue.

9. Dispositif selon la revendication 7 caractérisé en ce que chaque registre de file d'attente ($7_1 \ldots 7_n$) est affecté respectivement à une association.

10. Dispositif selon la revendication 8 caractérisé en ce que le multiplexeur (8) élimine des files d'attente contenues dans les registres de files d'attente ($7_1 \ldots 7_n$) les trames qui ont épuisées leur délai de rétention.

11. Dispositif selon la revendication 9 caractérisé en ce que le multiplexeur (8) sélectionne chaque nouvelle trame à émettre sur un réseau en fonction de la priorité, de la capacité minimale requise et le délai de réquisition des ressources.

**Patentansprüche**

1. Verfahren zur Verbindung lokaler Netze, dadurch gekennzeichnet, daß es darin besteht, die Gruppenadresse des Empfängerfeldes eines MAC-Rahmens implizit mit einem Deskriptor der in der Verbindungsbrücke enthaltenen Zuordnung zu verbinden, in der Verbindungsbrücke eine Steuerung des Flusses durchzuführen, indem die Flüsse von Zuordnung zu Zuordnung unterschieden werden und die Informationen des Zuordnungs-Deskriptors benutzt werden, und daß der Rahmen auf das nachfolgende Netz mit einer Empfängeradresse zurückgesendet wird, die entweder die Adresse des oder der Empfänger oder die Adresse der Zuordnungsgruppe im neuen Netz ist.

2. Verfahren nach Anspruch 1, dadurch gekennzeichnet, daß es darin besteht, für jede Zuordnung einen Zuordnungs-Verbindungs-Deskriptor und einen Zuordnungs-Datagramm-Deskriptor zu schaffen.

3. Verfahren nach Anspruch 2, dadurch gekennzeichnet, daß ein Zuordnungs-Verbindungs-Deskriptor ein Optionswort für das Nichterfordernis enthält, das die Anzahl der zugewiesenen Kredite $CM_c(A)$, die Anzahl der verfügbaren Kredite $CR_c(A)$ die Priorität und die Klasse der Zuordnung anzeigt.

4. Verfahren nach einem der Ansprüche 2 und 3, dadurch gekennzeichnet, daß ein Zuordnungs-Verbindungs-Deskriptor ein Erfordernis-Optionswort enthält, das die Anzahl der verwendeten Kredite $CE_c(A)$, die Priorität und die Klasse der Zuordnung anzeigt.

5. Verfahren nach einem der Ansprüche 1 bis 3, dadurch gekennzeichnet, daß die Steuerung des Flusses dadurch stattfindet, daß an der Verbindungsbrücke ein Kredit beeinflußt wird, der eine bestimmte Speicherkapazität repräsentiert, die gleich der Summe der Gesamtzahl $C_c$ der den Verbindungen zwischen den Netzen angebotenen Kredite und der Anzahl $C_d$ der den zwischen den Netzen übertragenen Datagrammen angebotenen Kredite ist.

6. Verfahren nach Anspruch 5, dadurch gekennzeichnet, daß jeder Zuordnungs-Datagramm-Deskriptor ein Wort enthält, das die Restverweildauer des Kredits, die Priorität und die Klasse der Zuordnung repräsentiert.

7. Vorrichtung zum Herstellen einer Verbindung zwischen lokalen Netzen für die Durchführung des Verfahrens nach einem der Ansprüche 1 bis 6, dadurch gekennzeichnet, daß jede Verbindungsbrücke ein Rahmen-Warteschlangenregister (4), das zwischen einem ersten Netz und einem Rahmenverteiler (5) angeschlossen ist, und eine Gruppe von Warteschlangenregistern ($7_1 \ldots 7_n$) enthält, die parallel zwischen dem Ausgang des Rahmenverteilers (5) und einem mit dem zweiten Netz gekoppelten Multiplexer (8) liegen.

8. Vorrichtung nach Anspruch 7, dadurch gekennzeichnet, daß der Rahmenverteiler (5) die Rahmen abhängig von ihrem Empfängerfeld sortiert, ein Ankunftsdatum hinzufügt und die Rahmen zurückweist, wenn die Empfängeradresse unbekannt ist.

9. Vorrichtung nach Anspruch 7, dadurch gekennzeichnet, daß jedes Warteschlangenregister ($7_1 \ldots 7_n$) jeweils einer Zuordnung zugewiesen ist.

10. Vorrichtung nach Anspruch 8, dadurch gekennzeichnet, daß der Multiplexer (8) aus den anstehenden Warteschlangen, die in den Warteschlangenregistern ($7_1 \ldots 7_n$) enthalten sind, die Rahmen eliminiert, die ihre Verweilverzögerung ausgeschöpft haben.

**11.** Vorrichtung nach Anspruch 9, dadurch gekennzeichnet, daß der Multiplexer (8) jeden neuen über ein Netz zu sendenden Rahmen abhängig von der Priorität, der erforderlichen minimalen Kapazität und der Verweilverzögerung der Ressourcen auswählt.

**Claims**

**1.** Method of bridging between local networks, characterized in that it consists in implicitly associating the group address of the recipient field of a MAC frame with an association descriptor contained in the bridge, in performing flow control in the bridge by discriminating the flows association by association and by using the information of the association descriptor and in resending the frame on the following network with, as recipient address, either the address of the recipient or recipients or the group address of the association in the new network.

**2.** Method according to Claim 1, characterized in that it consists in creating an association-connection descriptor and an association-datagram descriptor for each association.

**3.** Method according to Claim 2, characterized in that a connection association descriptor includes a non-requisition option word indicating the number of credits allotted $CM_c(A)$, the number of credits available $CR_c(A)$, the priority and the class of the association.

**4.** Method according to either of Claims 2 and 3, characterized in that a connection association descriptor includes a requisition option word indicating the number of credits being used $CE_c(A)$, the priority and the class of the association.

**5.** Method according to any one of Claims 1 to 3, characterized in that the flow control takes place by allocating the the bridge a credit representing a defined storage capacity equal to the sum of the total number $C_c$ of credits offered to the connections between networks and of the number $C_d$ of credits offered to the datagrams transmitted between networks.

**6.** Method according to Claim 5, characterized in that each datagram association descriptor includes a word representing the remaining duration of retention of the credit, the priority and the class of the association.

**7.** Device for bridging between local networks for implementing the method according to any one of Claims 1 to 6, characterized in that each bridge includes a frame waiting queue register (4) coupled between a first network and a frame distributor (5) and a set of waiting queue registers ($7_1 \ldots 7_n$) linked in parallel between the output of the frame distributor (5) and a multiplexer (8) coupled to a second network.

**8.** Device according to Claim 7, characterized in that the frame distributor (5) sorts the frames depending on their recipient field, attributes an arrival date and rejects the frames if the recipient address is unknown.

**9.** Device according to Claim 7, characterized in that each waiting queue register ($7_1 \ldots 7_n$) is allocated respectively to an association.

**10.** Device according to Claim 8, characterized in that the multiplexer (8) eliminates from the waiting queues contained in the waiting queue registers ($7_1 \ldots 7_n$) the frames which have exhausted their retention time.

**11.** Device according to Claim 9, characterized in that the multiplexer (8) selects each new frame to send on a network depending on the priority, on the minimum capacity required and the resource requisition time.

# FIG.1

# FIG.2A

# FIG.2B

# FIG. 3

Table T

# FIG. 4A

| $CM_C(A)$ | $CMR_C(A)$ |
|-----------|------------|
| Priorité | Classe |
| $CE_C(A)$ | Priorité |
| Classe | |
| | |
| | |

# FIG. 4B

| Durée rétention |
|-----------------|
| Priorité |
| Classe |
| |
| |

# FIG. 5